# EUROPEAN PATENT SPECIFICATION

(11) **EP 3 202 644 B1**
(45) Date of publication and mention of the grant of the patent: **05.12.2018**
(21) Application number: 17153691.5
(22) Date of filing: 30.01.2017
(51) Int. Cl.: B62D 7/14, B62D 13/04

(54) **AN AXLE OF A VEHICLE WITH A SELF-TRACKING STEERING, EQUIPPED WITH AN ASSISTED STEERING DEVICE**
ACHSE EINES FAHRZEUGS MIT EINER NACHLAUFLENKUNG, AUSGESTATTET MIT EINER VORRICHTUNG ZUM ASSISTIERTEN LENKEN
ESSIEU D'UN VÉHICULE AVEC UNE DIRECTION À SUIVI AUTOMATIQUE, ÉQUIPÉ D'UN DISPOSITIF DE DIRECTION ASSISTÉE

(30) Priority: 02.02.2016 IT UB20160336
(43) Date of publication of application: 09.08.2017
(73) Proprietor: R.P.F. S.p.A., 21040 Uboldo (Varese) (IT)
(72) Inventor: RADRIZZANI, Flavio, 21040 Uboldo (Varese) (IT)
(74) Representative: Rapisardi, Mariacristina

(56) References cited:
- EP-A1- 2 272 736
- EP-A1- 2 465 753
- WO-A1-2014/047842
- US-A1- 2009 199 603

## Description

The present invention relates to a self-steering axle of a vehicle equipped with an assisted steering device, and more precisely to an axle having a self-tracking steering which, as is known, is of a type in which the steering angle is modified only by the system of forces that originate from the adherence of the wheel to the ground.

The axle follows the trajectory imposed by the other vehicle axles by effect of the geometry thereof characterised by the position of the steering hinge, which is advanced with respect to the axis of instantaneous rotation of the wheel.

The system of forces originating from the adherence of the wheel to the ground generates a momentum with respect to said hinge axis that is able to direct the wheel in the above-mentioned direction.

It is also known that self-steering axles of this type require a locking device which keeps the wheels straight in reverse, for example during manoeuvring, and in some driving conditions in which the self-steering might cause a dangerous behaviour of the vehicle, for example in high-speed movement.

At present the locking system is usually realised with oil-hydraulic actuators.

A known device is a cylinder solidly constrained to the body of the self-steering axle, in which a rod is slidably housed having the two ends thereof exiting from the cylinder connected to the steering arms.

A pump mounted on the vehicle generates, in the supply line, a fluid pressure sufficient to return and lock the rod in the position corresponding to the rectilinear driving condition.

The cylinder can be directly commanded by the operator or automatically using sensors and devices able to detect the operating conditions of the vehicle and command the locking system in consequence of the detections.

An example of control can comprise phonic wheels and sensors, alike to those used for ABS systems, which detect both the velocity and the direction of movement of the vehicle, so as to carry out the control both in reverse and fast motion.

These control devices however cannot have an influence on the velocity of realignment of the axle after having passed round a bend.

The realignment can take place only by effect of the forces generated by the dynamics of the movement.

In the particular case of agricultural trailers, characterised by the high centre of gravity, wide-section tyres inflated at low pressure, associated to the ever-growing mass and velocity of the trailer, the realignment can be slow with respect to the needs of road circulation and can create potentially dangerous situations for road circulation.

EP2272736 A1, EP2465753 A1 and WO2014/047842 A1 disclose an axle of a vehicle with a self-tracking steering according to the preamble of claim 1.

The technical task of the present invention is to make available an axle of a vehicle with self-tracking steering, provided with an assisted steering device which enables an effective and rapid realignment of the axle after passing round a bend.

The technical task, as well as these and other objects according to the present In an embodiment of the invention said relief valve is a three-way valve.

In an embodiment of the invention, said relief valve has an inflow pathway for the fluid, a delivery pathway for the fluid and a relief pathway for the fluid, which is connected to a fluid relief line.

In an embodiment of the invention said disabling means comprises a shut-off solenoid valve on said relief line.

In a further embodiment of the invention said pressure relief valve on said fluid supply line is a proportional valve.

In an embodiment of the invention said supply line comprises a non-return valve between said source of pressurized fluid and said pressure relief valve.

In an embodiment of the invention said supply line comprises a shut-off solenoid valve.

The assisted steering device advantageously therefore provides an active auxiliary function, a locking function of the axle in realigned trim, and a release function of the axle from the re-aligned trim.

Further characteristics and advantages of the invention will more fully emerge from the description of a preferred but not exclusive embodiment of the axle with the assisted steering device according to the invention, illustrated by way of nonlimiting example in the accompanying figures of the drawings, in which:
figure 1 shows a lateral elevation view of the self-steering axle;
figure 2 shows a lateral elevation view of the self-steering axle in cross-section in the absence of supply to the cylinder;
figure 3 shows a lateral elevation view of the self-steering axle in cross-section in the presence of supply to the cylinder, with the axle in realigned trim;
figure 4 shows a lateral elevation view of the self-steering axle in cross-section in the presence of supply to the cylinder, with the axle in non-realigned trim;
figure 5 is a circuit diagram of the assisted steering device when not applied;
figure 6 is a circuit diagram of the assisted steering device in an activated configuration of the auxiliary function;
figure 7 is a circuit diagram of the assisted steering device in an activated configuration of the locking function;
figure 8 is a circuit diagram of the assisted steering device in an activated configuration of the releasing function;
figure 9 is a variant of the circuit diagram of the assisted steering device in which the pressure limiting valve is of the proportional type.

With reference to the figures of the drawings, an axle of a vehicle is described having a self-tracking steering, denoted in its entirety by reference numeral 1.

The axle 1 is equipped with an assisted steering device comprising an oil-hydraulic actuator 2 supplied by a fluid supply line 3 connected to a source of pressurized fluid comprising a supply pump 10.

The assisted steering device advantageously comprises a pressure relief valve 4 on the fluid supply line 3.

The relief valve 4 is of the type that can be located on the market and will for this reason not be further described in detail.

For example, the relief valve 4 is a direct-acting pressure reduction valve, for example commercially known as ZDRK, produced by Bosch™. It is of the three-way type and therefore comprises an inflow pathway for the pressurized fluid source, a delivery pathway for the pressurized fluid connected to the actuator 2, and a relief pathway of the fluid connected to a relief line 6 of the fluid comprising a discharge tank 12.

Substantially, if the delivery pressure of the relief valve 4 increases beyond a calibration value, an internal communication pathway is opened, in the relief valve 4, between the delivery pathway and the relief pathway from which the quantity of fluid exits so that the delivery pressure does not further increase.

For this specific solution means 5 for disabling the relief valve 4 is provided.

The disabling means 5 comprises a shut-off solenoid valve 7 on the relief line 6.

The shut-off solenoid valve 7 switches to the closed position of the relief line 6 in order to prevent release of the pressurized fluid which would thus disable the relief function of the relief valve 4.

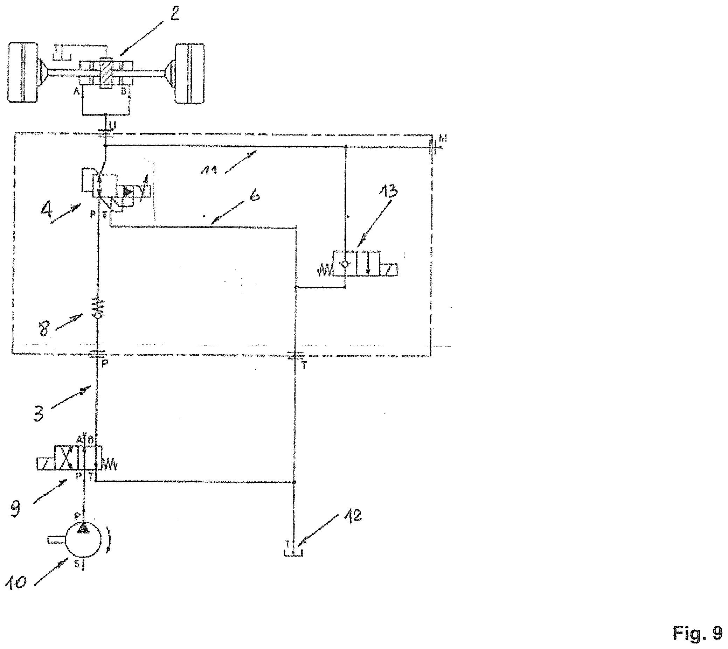

With reference to figure 9, on the other hand, the relief valve 4 is a proportional pressure reduction valve, for example commercially known as DRE or ZDRE, produced by Bosch™. With respect to the previously-illustrated solution, the circuit diagram is simplified due to the fact that it is no longer necessary to include special disabling means that is structurally independent of the pressure limiting valve 4, given that the function of the disabling means can be carried out naturally by the proportional relief valve 4 itself.

The supply line 3 comprises a non-return valve 8 between the source of pressurized fluid and the pressure relief valve 4.

The supply line 3 comprises a shut-off solenoid valve 9 positioned between the non-return valve 8 and the source of pressurized fluid.

Where the vehicle has a trailer, the supply pump 10 and the shut-off solenoid valve 9 are mounted on the tractor vehicle while the non-return valve 8 and the pressure relief valve are mounted on the trailer of the vehicle.

The assisted steering device also has a line 11 for resetting the pressure of the fluid in the actuator 2, connecting the delivery pathway of the pressure relief valve 4 to the discharge tank 12.

The pressure resetting line 11 also comprises a shut-off solenoid valve 13, also preferably mounted on the trailer of the vehicle, like the shut-off solenoid valve 7.

The oil-hydraulic actuator 2 comprises a hollow cylinder 14 fixed to the axle 1 and a rod 15 axially slidable in the cylinder 14.

The rod 15 has ends 15' protruding from the cylinder 14 that are connectable to steering arms 17 of the vehicle.

The rod 15 further has a fixed annular protrusion 16.

At opposite sides of the protrusion 16, the cylinder 14 has a first chamber 18 and a second chamber 19 having variable volumes.

Each chamber 18, 19 is provided with a respective feeding mouth 20, 21 connected to the delivery pathway of the pressure relief valve 4.

Each chamber 18, 19 is delimited by a respective fixed sleeve 22, 23 opposite the annular protrusion 16 and a respective slidable sleeve 24, 25 adjacent to the annular protrusion 16.

Each fixed sleeve 22, 23 and each slidable sleeve 24, 25 has an internal surface joined to the lateral surface of the rod 15 and an external surface joined to the internal lateral surface of the cylinder 14.

Suitable fluid seals are interposed between the joined surfaces.

Each fixed sleeve 22, 23 is rigidly connected to ends of the cylinder 14 and guides the axial sliding of the rod 15 with the internal surface thereof.

Each sliding sleeve 24, 25 is slidable along the axis of the cylinder 14 both with respect to the cylinder 14 and with respect to the rod 15 and has a first travel limit stop defined by the fixed sleeve 22, 23 adjacent thereto and a second travel limit stop defined by a ring 26 fixed centrally along an internal perimeter circumference of the cylinder 14.

The fixed ring 26 has a connecting hole 27 to a relief mouth 28 afforded through the thickness of the cylinder wall 14.

The sliding sleeves 24, 25 are able to interact with the protrusion 16 of the rod 15 so as to displace it, in order to modify the driving condition of the wheels.

The rectilinear driving condition of the wheels is defined by the alignment of the protrusion 16 to the fixed ring 26.

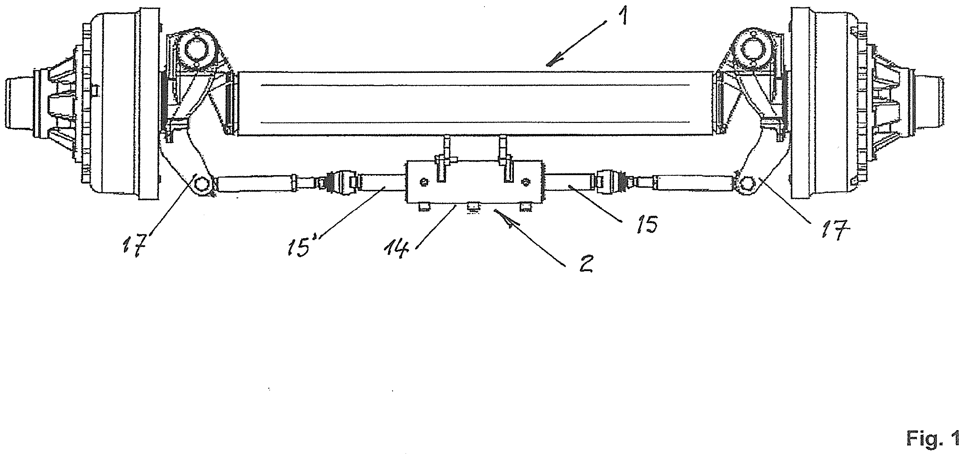

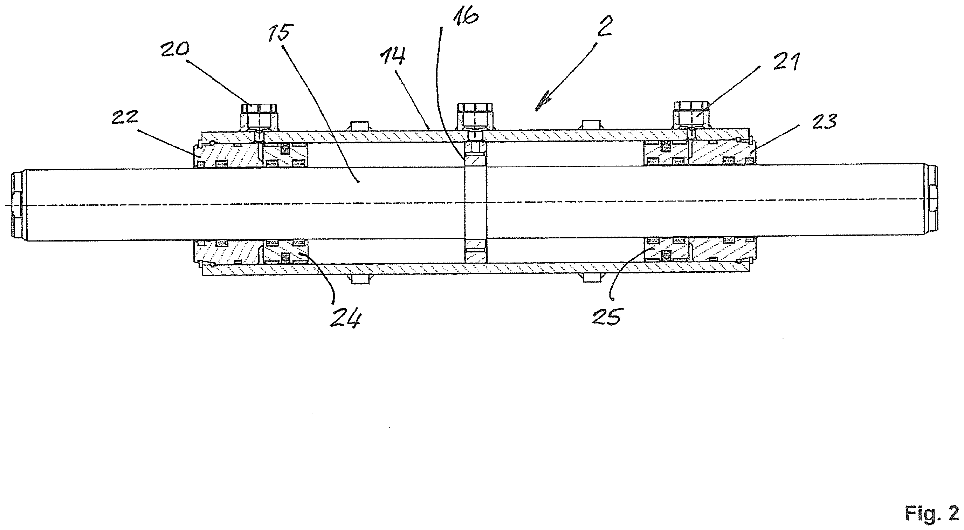

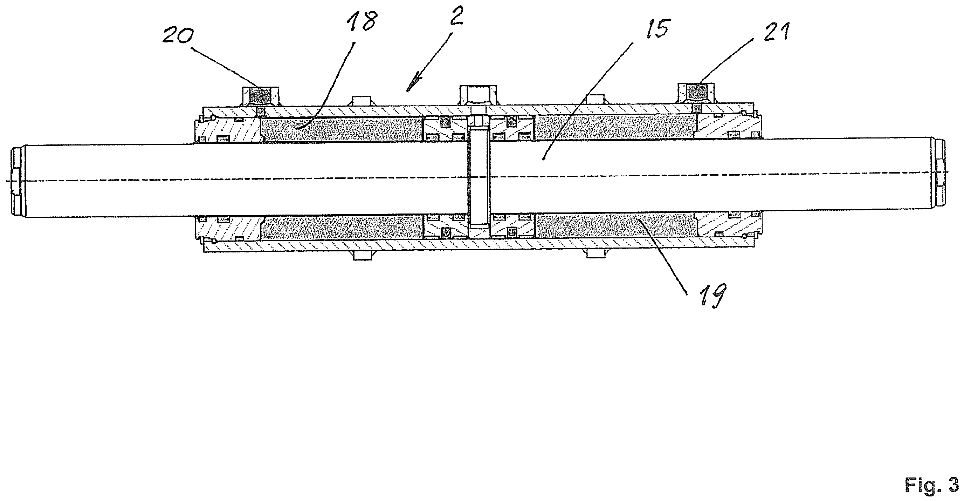

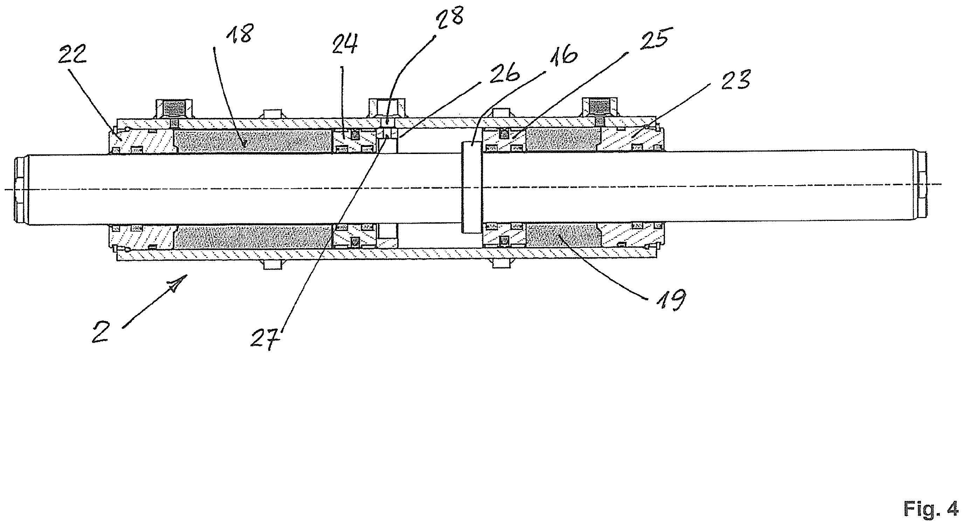

The control, with reference in particular to figures 1-8, is carried out in the following way.

The controller of the assisted steering device is configured for switching the disabling means 5 from an enabled state, for locking the axle in rectilinear driving condition, to a disabled state, for assisting the return of the axle to a rectilinear driving condition, and for switching the state of the shut-off solenoid valves.

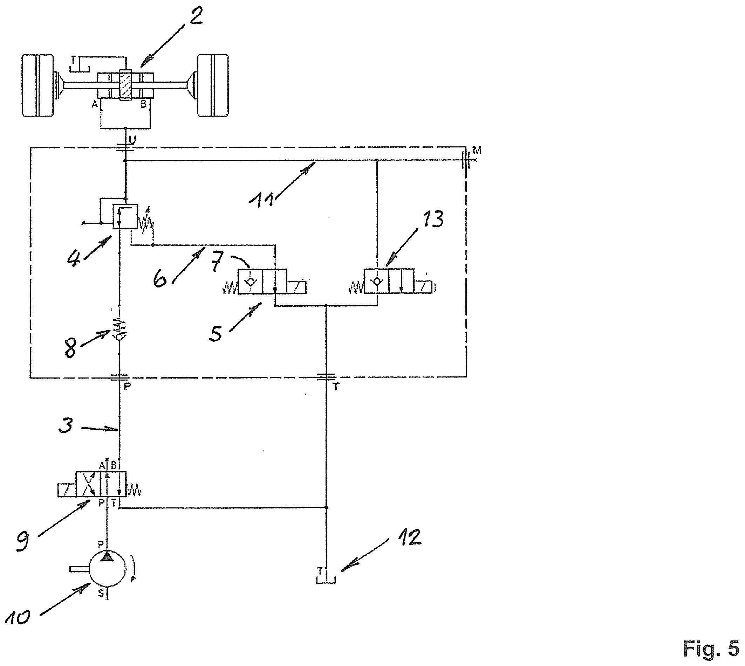

With reference to figure 5 the assisted steering device is disengaged since the flow from the tractor vehicle to the trailer is interrupted by the normally-closed shut-off solenoid valve 9.

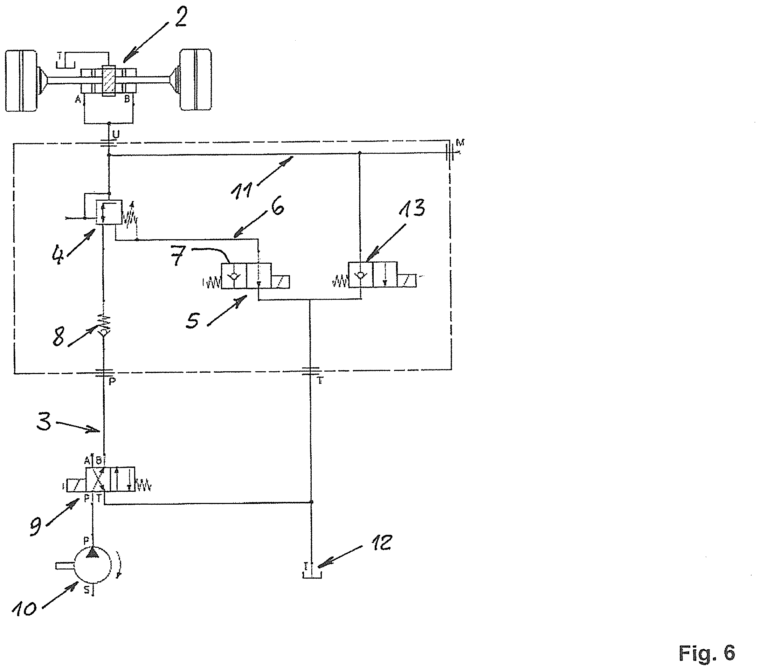

With reference to figure 6, the assisted steering device is in an active auxiliary configuration, activated by powering the solenoid valve 9 which opens, while the normally-open solenoid valve 7 and the normally-closed solenoid valve 13 are not supplied and thus remain in this state. Thus, the fluid can flow through the relief line 6 towards the tank 12 and the relief valve 4 can carry out the function thereof, injecting fluid at a controlled pressure through the feeding mouths 21, 22. The controlled pressure exerted via the sliding sleeves 24, 25, two equal and opposite forces on the annular protrusion 16 of the rod 15 which is maintained in the central position in the cylinder 14 which corresponds to the trim of the self-steering axle in rectilinear movement. Each displacement of the rod 15 from said central position is thus obstructed by the relative sliding sleeve 24, 25 with a force that is proportional to the pressure of the fluid injected into the cylinder 14 regulated by the relief valve 4.

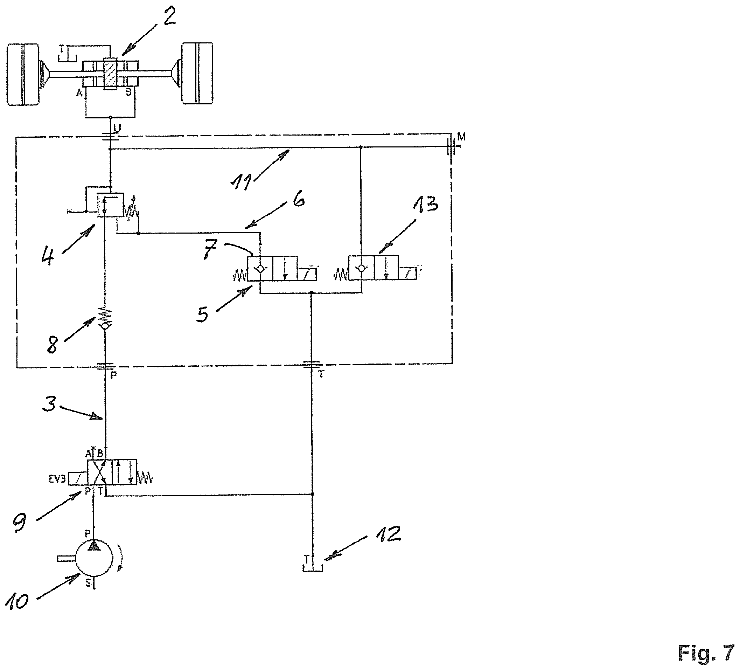

With reference to figure 7, the assisted steering device is in a locked configuration of the axle in rectilinear movement trim obtained by increasing the pressure internally of the cylinder 14 up to the maximum value dispensed by the supply pump 10 so as to prevent any movement of the rod 15 impressed by the forces generated during the movement of the vehicle. The locked configuration is activated by keeping the solenoid valve 9 supplied, which solenoid valve 9 remains open, supplying the solenoid valve 7 which closes, and leaving the solenoid valve 13 that remains closed deactivated. The fluid does not have an open pathway towards the discharge tank 12 and therefore the relief valve 4 is not able to carry out the function thereof and the pressure of the fluid in the cylinder 14 thus reaches the maximum value thereof. The equal and opposite forces acting on the rod 15 of the cylinder 14 reach the maximum value and prevent any movement of the rod. In this condition the fluid circuit is isolated by the source of pressurized fluid supply by effect of the non-return valve 8, and consequently the lock is operative independently of the state of the solenoid valve 9.

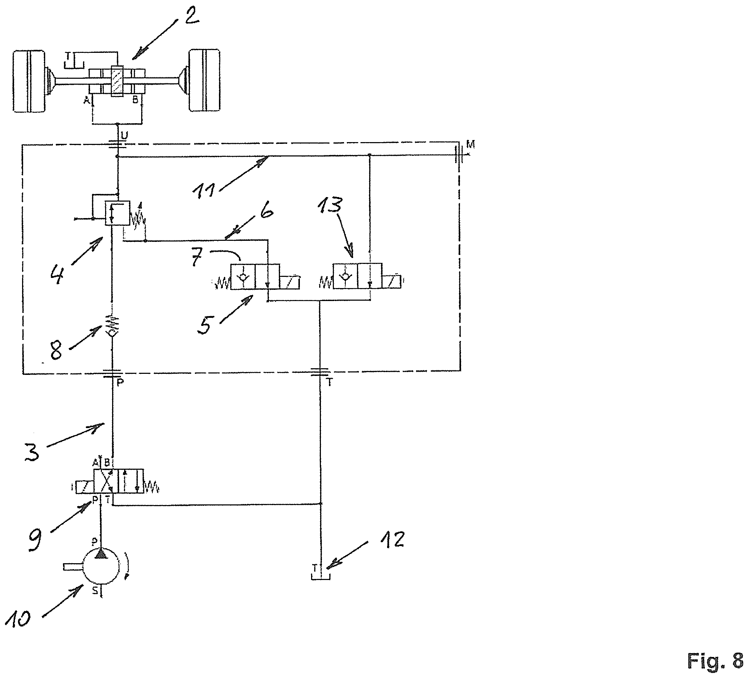

With reference to figure 8, the assisted steering device is in an unlocked configuration of the axle obtained by supplying the solenoid valve 9, which opens, keeping the solenoid valve 7 unsupplied and therefore open and the solenoid valve 13 supplied and thus open. In this case the whole fluid circuit is in communication with the tank 12 and therefore the fluid pressure in the cylinder 14 is annulled. Consequently, the steering is free.

When the hydraulic supply is disengaged, i.e. both when the solenoid valve 9 is not supplied and when the supply pump 10 is off, for example because the tractor vehicle is unhooked from the trailer or the engine is switched off, the controller "freezes" the assisted steering device in the last activated configuration.

The assisted steering device of a self-steering axle of a vehicle as conceived herein is susceptible to many modifications and variations, all falling within the scope of the invention as defined by the appendant claims. In practice the materials used, as well as the dimensions, can be any according to needs and the state of the art.

## Claims

1. An axle (1) of a vehicle with a self-tracking steering, said axle being of the type that follows the trajectory imposed by the other vehicle axles by effect of the geometry thereof wherein the position of the steering hinge, which is advanced with respect to the axis of instantaneous rotation of the wheel so as that the steering angle is modified by the system of forces originating from the adherence of the wheel to the ground , said axle being equipped with an assisted steering device comprising an oil-hydraulic actuator supplied by a fluid supply line (3) connected to a source of pressurized fluid comprising a pump (10), wherein it comprises a pressure relief valve (4) on said fluid supply line (3), and wherein said oil-hydraulic actuator comprises a cylinder (14) that can be secured to the axle (1), a rod (15) that is slidable in the cylinder (14) and that has an annular protrusion (16) and ends (15') protruding from the cylinder (14) that are connectable to the steering arms of the vehicle, a first (18) and a second (19) chamber of the cylinder (14) on opposite sides of the protrusion (16), each chamber (18, 19) being provided with a feeding mouth (20, 21) connected to said fluid supply line (3) and being delimited by a fixed sleeve (22, 23) opposite the protrusion (16) and a sleeve (24, 25) adjacent to the protrusion (16) and slidable along the rod (15) so as to interact with said protrusion (16), and a travel limit stop for the slidable sleeves (24, 25) at the position of the protrusion (16) with which a rectilinear driving condition is associated, **characterized in that** it comprises means (5) for disabling said relief valve (4), **in that** it comprises a line (11) for resetting the pressure of the fluid in the actuator comprising a shut-off solenoid valve (13), and **in that** it comprises a controller for the relief valve (4) for switching it from a state associated with the locking of the axle (1) in a rectilinear driving condition, where said disabling means are enabled, said shut-off solenoid valve (13) is closed and said actuator is fed with the maximum pressure of said pump (10), to a state of assistance in returning the axle (1) to a rectilinear driving condition, where said disabling means are disabled, said shut-off solenoid valve (13) is closed and said actuator is fed with the limited pressure by the relief valve (4), said controller switching the shut-off solenoid valve (13) of the resetting line (11) into the open state for free steering of the axle (1) where pressure in the cylinder (14) is annulled.

2. The axle (1) according to claim 1, **characterized in that** said relief valve (4) is a three-way valve.

3. The axle (1) according to claim 2, **characterized in that** said relief valve (4) has an inflow pathway for the fluid, a delivery pathway for the fluid and a relief pathway for the fluid, which is connected to a fluid relief line (6).

4. The axle (1) according to claim 1, **characterized in that** said disabling means (5) comprises a shut-off solenoid valve (7) on said relief line (6).

5. The axle (1) according to claim 1, **characterized in that** said relief valve (4) is a proportional valve.

6. The axle (1) according to claim 1, **characterized in that** said supply line (3) comprises a non-return valve (8) between said source of pressurized fluid and said pressure relief valve (4).

7. The axle (1) according to claim 1, **characterized in that** said supply line (3) comprises a shut-off solenoid valve (9).

## Patentansprüche

1. Achse (1) eines Fahrzeugs mit einer Nachlauflenkung, wobei die Achse vom Typ ist, der der von den anderen Fahrzeugachsen durch deren Geometrie vorgegebenen Bahn folgt, wobei die Position des Lenkscharniers im Vergleich zur Achse der Momentandrehung des Rads vorgeschoben ist, sodass der Lenkwinkel durch das System der Kräfte verändert wird, die durch die Haftung des Rads auf dem Boden erzeugt werden, wobei die Achse mit einer Vorrichtung zum assistierten Lenken ausgestattet ist, umfassend ein Hydraulikaggregat, das durch eine Mediumversorgungsleitung (3) gespeist wird, verbunden mit einer Quelle für ein mit Druck beaufschlagtes Medium, umfassend eine Pumpe (10), wobei sie ein Druckablassventil (4) an der Mediumversorgungsleitung (3) umfasst und wobei das Hydraulikaggregat einen Zylinder (14) umfasst, der an der Achse (1) gesichert werden kann, einen Stab (15), der im Zylinder (14) verschiebbar ist und der einen ringförmigen Vorsprung (16) und Enden (15') aufweist, die aus dem Zylinder (14) hervorstehen, die mit den Lenkarmen des Fahrzeugs verbunden werden können, eine erste (18) und eine zweite (19) Kammer des Zylinders (14) an entgegengesetzten Seiten des Vorsprungs (16), wobei eine jede Kammer (18, 19) mit einer Zuführungsöffnung (20, 21) versehen ist, verbunden mit der Mediumversorgungsleitung (3) und abgegrenzt durch eine fixierte Hülse (22, 23), gegenständig zum Vorsprung (16), und eine Hülse (24, 25), angrenzend an den Vorsprung (16) und verschiebbar entlang des Stabs (15), sodass sie mit dem Vorsprung (16) interagiert, und einen Verfahrendanschlag für die verschiebbaren Hülsen (24, 25) an der Position des Vorsprungs (16), mit dem ein geradliniger Fahrzustand assoziiert ist, **dadurch gekennzeichnet, dass** sie Mittel (5) zum Deaktivieren des Ablassventils (4) umfasst, dadurch, dass sie eine Leitung (11) zum Zurücksetzen des Drucks des Mediums im Aggregat umfasst, umfassend ein Absperrmagnetventil (13), und dadurch, dass sie eine Steuerung für das Ablassventil (4) umfasst, um dieses von einem Zustand, in dem es mit der Verriegelung der Achse (1) in einem geradlinigen Fahrzustand assoziiert ist, in dem die Deaktivierungsmittel aktiviert sind, das Absperrmagnetventil (13) geschlossen ist und das Aggregat mit dem maximalen Druck der Pumpe (10) gespeist wird, in einen Zustand der Unterstützung der Rückführung der Achse (1) in einen geradlinigen Fahrzustand umzuschalten, in dem die Deaktivierungsmittel deaktiviert sind, das Absperrmagnetventil (13) geschlossen ist und das Aggregat mit dem durch das Ablassventil (4) begrenzten Druck gespeist wird, wobei die Steuerung das Absperrmagnetventil (13) der Rücksetzungsleitung (11) in den offenen Zustand für die freie Lenkung der Achse (1) umschaltet, in der der Druck im Zylinder (14) aufgehoben ist.

2. Achse (1) nach Anspruch 1, **dadurch gekennzeichnet, dass** das Ablassventil (4) ein Dreiwegeventil ist.

3. Achse (1) nach Anspruch 1, **dadurch gekennzeichnet, dass** das Ablassventil (4) einen Einströmungsweg für das Medium, einen Ausströmungsweg für das Medium und einen Ablassweg für das Medium aufweist, der mit einer Mediumablassleitung (6) verbunden ist.

4. Achse (1) nach Anspruch 1, **dadurch gekennzeichnet, dass** die Deaktivierungsmittel (5) ein Absperrmagnetventil (7) an der Ablassleitung (6) umfassen.

5. Achse (1) nach Anspruch 1, **dadurch gekennzeichnet, dass** das Ablassventil (4) ein Proportionalventil ist.

6. Achse (1) nach Anspruch 1, **dadurch gekennzeichnet, dass** die Versorgungsleitung (3) ein Rückschlagventil (8) zwischen der Quelle des mit Druck beaufschlagten Mediums und dem Druckablassventil (4) umfasst.

7. Achse (1) nach Anspruch 1, **dadurch gekennzeichnet, dass** die Versorgungsleitung (3) ein Absperrmagnetventil (9) umfasst.

## Revendications

1. Essieu (1) d'un véhicule avec une direction à suivi automatique, ledit essieu étant du type suivant la trajectoire imposée par les autres essieux du véhicule sous l'effet de sa géométrie, dans lequel la position de l'articulation de la direction étant avancée par rapport à l'axe de rotation instantanée de la roue de manière à ce que l'angle de direction soit modifié par le système de forces émanant de l'adhérence de la roue au sol, ledit essieu étant équipé d'un dispositif de direction assistée comprenant un actionneur hydraulique à l'huile, alimenté par une conduite d'alimentation de liquide (3) raccordée à une source de fluide sous pression, comprenant une pompe (10), dans lequel il comprend un clapet de décharge de pression (4) sur ladite conduite d'alimentation de liquide (3), et dans lequel ledit actionneur hydraulique à l'huile comprend un cylindre (14) pouvant être fixé à l'essieu (1), une tige (15) pouvant coulisser dans le cylindre (14) et comportant une saillie annulaire (16) et des extrémités (15') dépassant du cylindre (14) pouvant être reliées aux bras de direction du véhicule, une première (18) et une seconde (19) chambres du cylindre (14) sur des côtés opposés de la saillie (16), chaque chambre (18, 19) étant pourvue d'une embouchure d'alimentation (20, 21) reliée à ladite conduite d'alimentation de liquide (3) et étant délimitée par un manchon fixe (22, 23), opposé à la saillie (16) et à un manchon (24, 25) adjacent à la saillie (16) et pouvant coulisser le long de la tige (15) de manière à interagir avec ladite saillie (16), et une butée de fin de course pour les manchons coulissants (24, 25) en correspondance de la position de la saillie (16) à laquelle est associée une condition d'entraînement rectiligne, **caractérisé en ce qu'**il comprend des moyens (5) pour désactiver ledit clapet de décharge (4), **en ce qu'**il comprend une conduite (11) servant à réinitialiser la pression du fluide dans l'actionneur comprenant une électrovanne de retenue (13), et **en ce qu'**il comprend un contrôleur pour le clapet de décharge (4) pour le passer d'un état associé au blocage de l'essieu (1), dans une condition d'entraînement rectiligne où lesdits moyens de désactivation sont activés, ladite électrovanne de retenue (13) est fermée et ledit actionneur est alimenté avec la pression maximum de ladite pompe (10), à un état d'assistance en ramenant l'essieu (1) à une condition d'entraînement rectiligne où lesdits moyens de désactivation sont désactivés, ladite électrovanne de retenue (13) est fermée et ledit actionneur est alimenté avec la pression limitée par le clapet de décharge (4), ledit contrôleur passant l'électrovanne de retenue (13) de la conduite de réinitialisation (11) à l'état d'ouverture pour la direction libre de l'essieu (1) où la pression dans le cylindre (14) est annulée.

2. Essieu (1) selon la revendication 1, **caractérisé en ce que** ledit clapet de décharge (4) est un robinet à trois voies.

3. Essieu (1) selon la revendication 2, **caractérisé en ce que** ledit clapet de décharge (4) comporte une voie d'entrée pour le fluide, une voie de sortie pour le fluide et une voie de décharge pour le fluide étant reliée à une conduite de décharge du fluide (6).

4. Essieu (1) selon la revendication 1, **caractérisé en ce que** lesdits moyens de désactivation (5) comprennent une électrovanne de retenue (7) sur ladite conduite de décharge (6).

5. Essieu (1) selon la revendication 1, **caractérisé en ce que** ledit clapet de décharge (4) est une valve proportionnelle.

6. Essieu (1) selon la revendication 1, **caractérisé en ce que** ladite conduite d'alimentation (3) comprend un clapet de non-retour (8) entre ladite source de fluide sous pression et ledit clapet de décharge de pression (4).

7. Essieu (1) selon la revendication 1, **caractérisé en ce que** ladite conduite d'alimentation (3) comprend une électrovanne de retenue (9).
